(19) Europäisches Patentamt
European Patent Office
Office européen des brevets

(11) **EP 1 631 829 B1**

(12) **EUROPEAN PATENT SPECIFICATION**

(45) Date of publication and mention
of the grant of the patent:
**13.04.2016 Bulletin 2016/15**

(51) Int Cl.:
***G01N 35/08*** (2006.01)

(21) Application number: **04736157.1**

(22) Date of filing: **04.06.2004**

(86) International application number:
**PCT/SE2004/000867**

(87) International publication number:
**WO 2004/109295 (16.12.2004 Gazette 2004/51)**

(54) **METHOD AND APPARATUS FOR CHARACTERIZATION OF INTERACTIONS**

VERFAHREN UND VORRICHTUNG ZUR CHARAKTERISIERUNG VON WECHSELWIRKUNGEN

PROCEDE ET APPAREIL DE CARACTERISATION D'INTERACTIONS

(84) Designated Contracting States:
**AT BE BG CH CY CZ DE DK EE ES FI FR GB GR
HU IE IT LI LU MC NL PL PT RO SE SI SK TR**

(30) Priority: **06.06.2003 SE 0301639
12.06.2003 US 477909 P**

(43) Date of publication of application:
**08.03.2006 Bulletin 2006/10**

(73) Proprietor: **GE Healthcare Bio-Sciences AB
75184 Uppsala (SE)**

(72) Inventors:
• **ANDERSSON, Karl
S-756 43 Uppsala (SE)**
• **WASS, Christina
S-753 27 Uppsala (SE)**

(74) Representative: **Brann AB et al
P.O. Box 3690
Drottninggatan 27
103 59 Stockholm (SE)**

(56) References cited:
**EP-A2- 0 247 800      EP-A2- 0 361 810
EP-A2- 0 444 441      US-A- 4 988 447
US-A1- 1 162 455      US-B1- 6 318 157**

## Description

### Technical field

The present invention relates generally to analysis methods wherein it is desired to determine characteristics, such as kinetic properties or affinity for various interactions in multi-component systems. In particular it relates to methods for the analysis of interactions between species in a liquid environment, such as a compound and a target. The invention also relates to the analysis of site specific binding between species, e.g. compounds and targets. More in particular it relates to a method and apparatus for determining kinetic properties or affinity by providing a pulsed gradient of a sample containing a compound of interest, whereby the target molecule is exposed to the gradient of the compound with which it can interact, and detecting a result of said interaction.

### Background of the invention

In the study of candidates for new drugs (screening) it is often the case that substances exhibiting weak binding are encountered, leading to rapid events, exhibiting small time constants. Surface Plasmon Resonance (SPR) is a powerful technique for the study of affinity between substrates and targets, but typically designed for slower events. Instruments utilizing the principle of SPR (e.g. the instruments supplied by the applicant of the present invention, Biacore AB, Uppsala, Sweden) measure changes in refractive index of the medium next to a sensor chip, resulting from altered mass concentration at the surface.

In conventional SPR assays (e.g. using the systems from Biacore AB, Uppsala, Sweden), one sample injection corresponds to one concentration of the selected compound, and the injection comprises one single segment or "plug" of sample liquid. In most cases of kinetic and affinity determination, a few injections of different concentration are sufficient to obtain reliable results of interaction rate or strength (i.e. association rate constant, dissociation rate constant and dissociation constant). However, when studying molecules with low affinity or exhibiting fast kinetics, many such measurements need to be performed. This is a relatively time-consuming process, with considerable sample losses. With the injection exhibiting the highest precision of the available injection methods, every injection requires 40 $\mu$l of sample in addition to the desired injection volume to prevent dispersion with buffer.

In an article by Shan-Retzlaf et al, in Analytical Chemistry, Vol. 72, No. 17, pp4212-4220, entitled " Analyte Gradient-Surface Plasmon Resonance: A One-Step Method for Determining Kinetic Rates and Macromolecular Binding Affinities"., method for determining kinetic rates and equilibrium binding affinities using SPR is disclosed.

It is a one-step method making use of a gradient such that under continuous-flow conditions, the concentration of compound to be analyzed passing over the sensor surface increases linearly with time. The rate at which analyte binds to the immobilized receptors is measured by monitoring the change in the surface plasmon resonance minimum as the analyte concentration increases. Kinetic rates are determined by fitting data to a modified version of a two-compartment model.

Although representing an improvement, it still suffers from a lack of capability to perform measurements on systems exhibiting relatively fast kinetic behaviour, and also in that relatively large sample quantities are needed for a full titration.

### Summary of the invention

The disadvantages with the prior art methods are overcome with the present invention, in a method for the characterization of interaction between at least two species in a liquid environment, such as the affinity and/or kinetic properties and/or the assay conditions, as defined in claim 1.

Thereby, a concentration gradient of at least a first one of said species is generated, and the gradient is passed through a sensor device. A result of an interaction between said at least two species is detected by said sensor device. Before passing the liquid flow through the sensor device, the flow of liquid is intersected at least once with an additional liquid, so as to create pulses of separated segments of liquid.

In this way, the amount of sample needed for the measurement is considerably reduced, and the time required for a completed measurement is also considerably reduced.

In one embodiment of the invention one compound to be studied and one target is used. This would be the most frequently used method of studying individual compounds/ substances.

In another embodiment a sample liquid is employed, comprising two or more compounds, one of which has known binding characteristics and constitutes the sample gradient, the characteristics of the other compound(s) being unknown. This embodiment is employed to assess information of the strength of the binding of the compound(s) having unknown characteristics, and to decide whether the compound binds to the same site on the target molecule or not.

In a further embodiment, the compound of interest is an enzyme reacting with a substrate.

In still another embodiment the gradient can be used for improving assay conditions, as exemplified by finding optimal conditions (concentration or pH) for the regeneration of a sensor surface (i.e. to remove compound from target).

In a further aspect of the invention there is provided an apparatus for the characterization of interaction, such as the affinity and/or kinetic properties and/or the assay conditions, of at least one compound in solution interacting with at least one target, as defined in claim 24.

The apparatus is suitably run under the control of software in the form of a computer program product directly loadable into the internal memory of a processing means within or associated with the apparatus, and comprising the software code means for performing the steps of the method according to the invention.

The software can also be in the form of a computer program product stored on a computer usable medium, comprising a readable program for causing a processing means in the apparatus to control an execution of the steps of the method according to the invention.

**Brief Description of the Drawings**

The invention will be described in detail below with reference to the drawings, in which

Fig. 1 shows schematically a system for performing the method according to the invention;

Fig. 2 illustrates a non-equilibrium state in a pulse injection according to the invention;

Fig. 3 is a typical sensorgram representing mass concentration near the surface as a function of time obtained with one embodiment of the method according to the invention;

Fig. 4 illustrates a dual gradient;

Fig. 5 shows responses of individual samples and the response of mixed samples of phenylbutazone and warfarin;

Fig. 6 shows responses of individual samples and the response of mixed samples of digitoxin and warfarin;

Fig. 7 illustrates the sum of added responses and the response of a mixture of digitoxin and warfarin;

Fig. 8 illustrates a set up for a case where the injections comprise alternating pulses of three different liquids;

Fig. 9. illustrates a response curve for a case where three pulsed injections are employed; and

Fig. 10 illustrates an alternative method of creating a gradient.

**Detailed description of the invention**

For the purpose of the present invention the following terms and expressions should be taken to have the indicated meanings:

For the purpose of this application, a "species" is any entity such as a molecule, a compound, substance, antibody, antigen, cell, cell fragment, or any other moiety that can be provided in a liquid environment. In order to be detectable, it should preferably be capable of some sort of interaction with another species, a result of the interaction being detectable by some means. However, of course in certain instances an analyte maybe does not interact with another species of interest, and thus no explicit result of interaction can be measured, but this lack of result is also detectable, and therefore this kind of non-interacting species is also included in the definition of species.

"Injection" is the delivery of at least a part of an amount of liquid into a flow cell or the like of an analysis instrument.

A "pulse" is a fraction of an injection, i.e. a segment of the injected amount of liquid.

A "pulse series" is at least two pulses.

The method according to the invention is usable with a variety of detection systems, including those relying on a label, such as a radiolabel, a chromophore, a fluorophore, marker for scattering light, electrochemically active marker, magnetically active marker, thermoactive marker, a chemiluminescent moiety or a transition metal, as well as so-called label free detection systems.

For many applications, detection is conveniently performed with a chemical sensor or a biosensor, which is broadly defined as a device using a component for molecular recognition (e.g. a layer or pattern with immobilized antibodies) in either direct conjunction with a solid state physicochemical transducer, or with a mobile carrier bead/particle being in conjunction with the transducer. While such sensors are typically based on label-free techniques, detecting e.g.

change in mass, refractive index, or thickness for the immobilized layer, there are also sensors relying on some kind of labelling. Typical sensor detection techniques include, but are not limited to, mass detection methods, such as piezo-lectric, optical, thermo-optical and surface acoustic wave (SAW) device methods, and electrochemical methods, such as potentiometric, conductometric, amperometric and capacitance/impedance methods. With regard to optical detection methods, representative methods include those that detect mass surface concentration, such as reflection-optical methods, including both internal and external reflection methods, angle, wavelength, polarization, or phase resolved, for example ellipsometry and evanescent wave spectroscopy (EWS), both may include surface plasmon resonance (SPR) spectroscopy, Brewster angle refractometry, critical angle refractometry, frustrated total reflection (FTR), evanescent wave ellipsometry, scattered total internal reflection (STIR), optical wave guide sensors, evanescent wave-based imaging such as critical angle resolved imaging, Brewster angle resolved imaging, SPR angle resolved imaging, and the like. Further, photometric and imaging/microscopy methods based on for example surface enhanced Raman spectroscopy (SERS), surface enhanced resonance Raman spectroscopy (SERRS), evanescent wave fluorescence (TIRF) and phosphorescence may be mentioned, as well as waveguide interferometers, waveguide leaking mode spectroscopy, reflective interference spectroscopy (RIfS), transmission interferometry, holographic spectroscopy, and atomic force microscopy (AFR).

The invention is illustrated in the examples mainly with the use of SPR, which should not be taken to be limiting on the scope of the invention.

First a brief description of the SPR technique as used in the Biacore® systems will be given.

In SPR, changes in refractive index of the medium next to a sensor chip, resulting from altered mass concentration at the surface are measured. The signal is measured in response units, RU, 1,000 RU corresponding to an approximate surface concentration of 1 $ng/mm^2$, and graphically presented as a function of time in a sensorgram. In the terminology for the purpose of this application, the molecule attached to a surface is referred to as the target, whereas the compound to be analyzed is the molecule in solution. The solution containing the compound is injected over a surface, the sensor chip, typically coated with a carboxymethyldextran matrix, and transported by a continuous flow. The process is driven by a system of two automated pumps, one of which maintains a constant buffer flow and the other controls injection.

Target is covalently bound to the sensor chip matrix in a process called immobilisation. The most commonly used immobilisation technique is amine coupling, in which reactive esters are introduced into the surface matrix by modification of the carboxymethyl groups. These esters then react spontaneously with amines and other nucleophilic groups on the target to form covalent links. There are other ways besides amine coupling to link target to the matrix. For example, the so-called "ligand thiol coupling" method introduces a reactive disulphide group on to carboxyl groups of the sensor chip matrix, which are exchanged with intrinsic thiol groups of the target.

The covalent coupling withstands conditions that break the bonds between target and compound, a process called regeneration. The same surface can therefore be used several times.

During injection, compound molecules are continuously transported to the surface, and allowed to associate with target molecules. When the injection stops, the buffer flow washes off dissociated compounds. The association phase is described by (for 1:1 binding)

$$dR/dt = k_a C(R_{max} - R) - k_d R \qquad (1)$$

At equilibrium the response is obtained as

$$R_{eq} = k_a C R_{max} / (k_a C + k_d) \qquad (2)$$

and during dissociation as

$$dR/dt = - k_d R_0 \qquad (3)$$

where R signifies the response at any time t, $R_{eq}$ the response at equilibrium, Ro the response at the end of an injection, and $R_{max}$ the maximum binding capacity of the surface in RU. C is the molar concentration of the compound of interest.

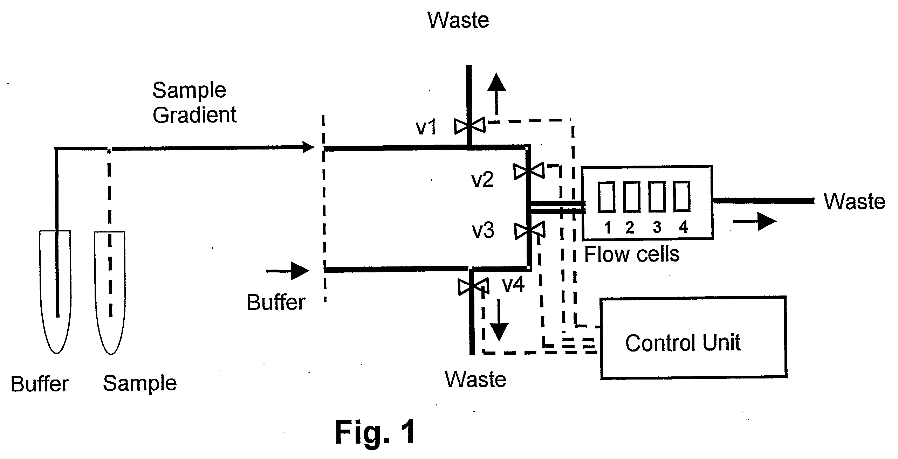

Fig. 1 illustrates schematically a system for performing a method using the principle of the pulse injection according to the invention, in an embodiment in the form of a set up with one sample liquid (exhibiting a gradient) and one buffer. It comprises a measurement system, which for the purpose of this invention comprises tubing, pumps, valves and sensors in which the liquids to be characterized flow. At least one compound is passed as a flow through the measurement system, and the interaction takes place within said measurement system. There are means, comprising valves, pumps and a control unit for generating a concentration gradient of at least a first one of said compounds. A sensor device capable of detecting a result of an interaction between at least said first compound and another species is provided, suitably as a flow cell. The pumps and/or valves are used for passing said flow through said sensor device, and for intersecting the flow of liquid at least once with a further liquid before the flow is passed through said sensor, so as to create at least two separated segments of liquid containing the compound of interest, under the control of the control unit.

Thus, the apparatus is run under the control of software in the form of a computer program product directly loadable into the internal memory of a processing means coupled to the apparatus. The program comprises the software code means for performing the steps of the method according to the invention.

The software can also be in the form of a computer program product stored on a computer usable medium, comprising a readable program for causing a processing means in the apparatus to control an execution of the steps of the method according to the invention.

The pulse injection method according to the present invention has two main features. Firstly, each injection contains a number of short sample pulses, suitably 4 or 5 up to 40 pulses, preferably 15-30, more preferably approximately 20 pulses, generated by an alternating sample and buffer flow, and each pulse preferably has a volume of 1-40$\mu$l, preferably 10-40$\mu$l, more preferably 15-25$\mu$l, suitably about 20$\mu$l. The duration of the pulses, i.e. each segment of solution can be 8-20, preferably about 10-15, suitably 12 seconds long, and the flow rate for the sample liquid through the flow cell may be 50-200, preferably 80-120, suitably 100$\mu$l/min.

In contrast, the conventional prior art method consists of one pulse (per injection; the entire injection is one pulse). Secondly, there is provided a concentration gradient combined with pulse injections, which taken together generate information from several concentration levels in a single injection, in that each pulse of the injection in principle constitutes one concentration. The gradient is produced when buffer and sample are allowed to mix in the tubing during sample aspiration as described below. It should also be noted that some pulses during one injection can be discarded, whereby the discarded segments will not be passed through the sensor. Alternatively, some aliquot(s) of liquid can be discarded even before performing the alternating buffer injections to create the separated segments.

We refer now to Fig. 1, which is a schematic illustration of a system embodying the invention and showing the flow paths, for a description of the basic principle of the method according to the invention.

As can be seen in Fig. 1, there are provided two vessels (e.g. test tubes) containing sample and buffer, respectively. There is also provided a means for aspirating liquid from the test tubes, indicated with vertical lines extending down into the test tubes. This means can suitably be a needle, and since the same needle is used for both liquids, the needle shown in the sample tube is shown by a broken line. The needle would thereby be physically moved between the tubes for the aspiration of liquids sequentially. Of course there are other possibilities of devising the aspiration means, the one shown being only exemplary.

A system buffer supply is also provided. Initially the entire system is filled with buffer, i.e. all tubing contains this buffer. The respective segments of tubing (sample and system buffer, respectively) are coupled to an Integrated Fluidic Cartridge (IFC), a device enabling controlled liquid delivery to one or more flow cells. Each flow cell has a sensor surface onto which one or more suitable target(s) are immobilized. There are also provided a number of valves in the IFC for the control of the flows of the respective liquids. Alternatively, the flow in the various lines can be controlled by accurate pumps, whereby the actual flow rates can be monotonically controlled to provide the desired flow rates, ranging from zero flow to the maximum flow rates required, or combinations thereof.

The first step in the procedure is to aspirate a small volume of buffer into the needle, i.e. to immerse the needle into the buffer tube, and to aspirate the appropriate volume into the needle. It is however not strictly necessary to fill the needle with buffer by aspiration. Instead, the needle can be filled with buffer from the other end, i.e. from the system buffer supply by filling the entire system with buffer. Then, the needle is moved to the sample tube and a suitable volume of sample of about 500$\mu$l is aspirated. However, the actual volume may depend on the application and the kind of sample, and can vary within wide limits, say between 1$\mu$l and 4ml.

The aspiration of sample will lead to mixing of the sample and buffer by dispersion, thereby creating a gradient in the tubing. In this case the gradient will be a decreasing gradient (as seen from the needle) running through the flow cell. If an increasing gradient is the sample required, one would have to aspirate buffer after the sample aspiration, and ensure that a non-dispersed sample trailing edge is provided by first aspirating an air bubble to protect the sample from liquid already present in the needle, second a sample and third a buffer segment. The aspiration sequence always ends with aspiration of one or a few air bubbles to protect the gradient from liquid already present in the IFC.

Prior to the first step, it is preferable to perform a few alternating air and sample aspirations to provide consecutive segments of air and sample and to inject them into the IFC. In this way the sample will be protected from unwanted dispersion with running buffer in the IFC, i.e. the leading front of the aspirated sample liquid will exhibit the nominal (maximum) concentration.

When a gradient has been established, it is injected via the needle into the IFC and valves v2 and v3 in the sample and buffer flow lines are opened and closed according to a programmed sequence to enable alternating sample (exhibiting a gradient in the longitudinal direction of the tubing) and buffer pulses to be fed into the flow cells, such that the sample liquid flow is intersected at least once, preferably a plurality of times, by a further liquid, represented by the system buffer in this case. This intersection will create at least two separated segments of liquid. However, other further liquids than the system buffer are of course possible, such as pure solvent, solutions containing other species of interest, etc.

Thus, the leading edge of a decreasing sample gradient flow will represent a first concentration. Most often the concentration at the leading edge will be very close to the nominal, and can be taken to represent a known concentration. However, the major part of the sample flow will exhibit a gradient, and thus the majority of said segments that are created, will have different concentrations with respect to said compound.

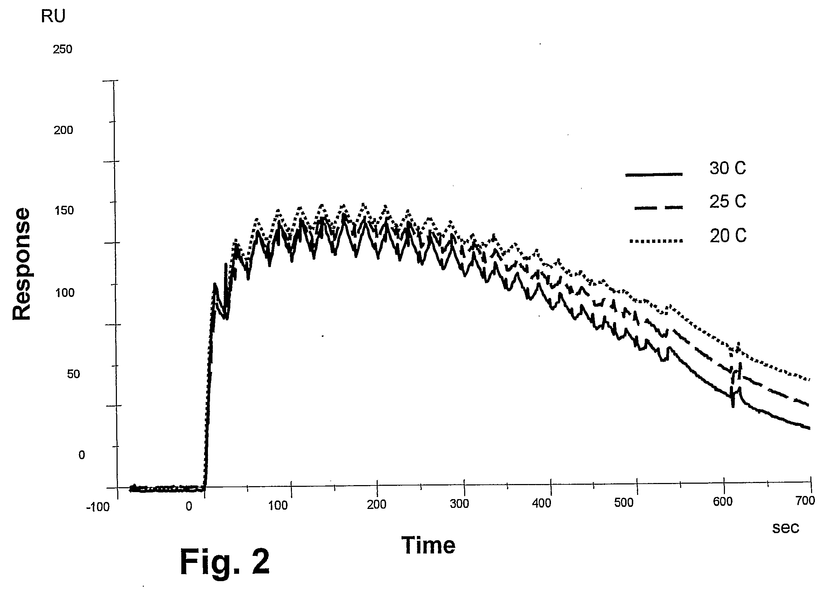

After a predetermined volume of sample gradient flow has passed into the flow cells, valve v2 is closed and valve v3 is opened, thereby injecting buffer into the line behind the sample flow. During the passage of sample over the sensor surface having targets immobilized on it, the sample will associate with the targets. The volume of sample should preferably be sufficient to enable equilibrium to establish. However, it is not always required that equilibrium be reached. As an example, Fig. 2 illustrates a non-equilibrium state, but an equilibrium level can be calculated from the graph. The time frames involved depend on sample specific binding and transport characteristics, flow rate, temperature, flow cell dimensions, etc.

When sample has been injected for a sufficiently long time, buffer is injected by opening valve v3 and closing valve v2. During the passage of buffer over the surface, sample will dissociate. The process is repeated until the aspirated sample has been injected.

It is not necessary to inject the complete gradient into the flow cell. During buffer injection (v3 open, v2 closed) valve 1 can be opened to discard a small segment of the gradient. This will reduce the number of pulses produced and reduce the time needed for a full injection.

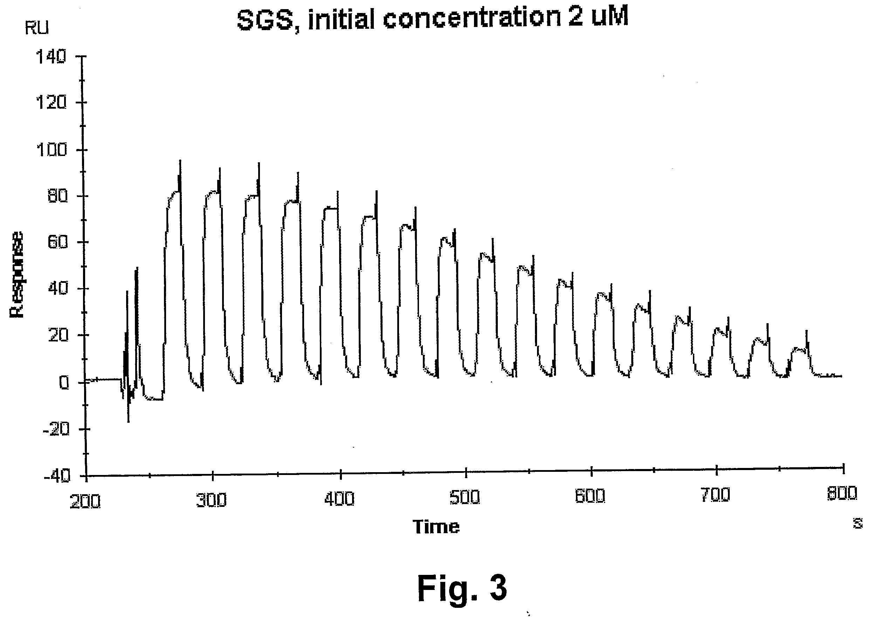

Fig. 3 is a typical example of a sensorgram resulting from a procedure as the one just described.

In one preferred embodiment, wherein a system without valves is used, during the association phase, i.e. during the time the sample is passed through the sensor cell, the buffer flow is set to a very low value, less than 5%, and e.g. about 1% of the regular flow. This is not strictly necessary, but prevents sample solution from leaking into the buffer line. Then a certain, predetermined amount of sample is injected into the IFC at a specified rate. The buffer flow rate is then reset to the regular rate. During the passage of buffer through the cell, sample compound that has bound to the target on the sensor surface is allowed to dissociate for a suitable time period.

In one embodiment of the invention, the sample gradient can be a "dual gradient". This is accomplished by aspirating two different sample solutions, which when they are mixed in the tubing by dispersion in the same manner as with sample and buffer, produce an increasing gradient of one sample compound and a decreasing gradient of the other sample compound. This kind of gradient can be useful for determining if two samples compete for the same binding site on the target or if they bind to different binding sites on the target. Such information is highly valuable in the drug development process, as it can indicate possible unwanted interactions between drugs in different therapeutic areas.

In a further embodiment of the invention the reaction system to be studied can be an enzyme-substrate interaction. Thereby, an enzyme solution is substituted for the buffer, and a gradient of a suitable substrate for the enzyme is provided by aspiration of a suitable buffer and substrate solution in a manner similar to the principle discussed above.

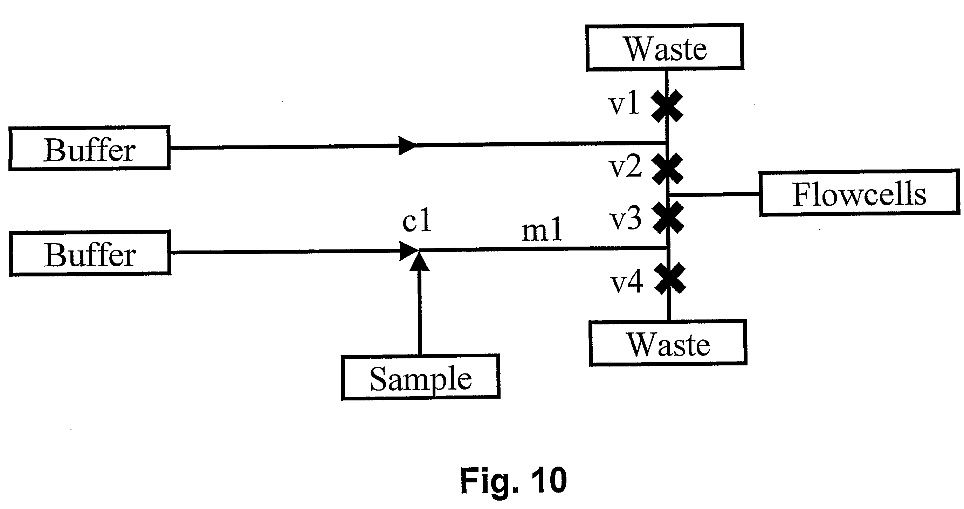

With reference to Fig. 10, an alternative method of creating a gradient is possible by aspirating a sample segment of known concentration and diluting it with buffer in the IFC using a connection c1 and a tubing segment m1. This allows the buffer and sample to form a homogenous mixture prior to contacting the flowcells. The pulses would be generated as previously described, i.e. by using alternating pumps or valves v2 and v3. The connection c1 could be a simple T-connection so that the concentration of the sample in the gradient is controlled by how the ratio of [flow rate (buffer)] and [flow rate (sample)] changes over time. Another possibility could be to have a two-way valve as connection c1. The concentration of the sample will be controlled by switching the inlet to m1 between buffer and sample, having the two-way valve open for buffer a different time than open for sample. In the tubing segment m1 the discrete connected segments of sample and buffer will form a homogenous mix due to dispersion. This method makes it possible to generate a gradient with known concentration of the sample at all times, in contrast to the dispersion concentration gradient where only the first few pulses have a known compound concentration.

The method according to the invention is applicable in a general sense, i.e. for an arbitrary number of sample flows, although practical limitations restrict the actual number that is possible. If it is desirable to run a plurality of different sample or reagent solutions, a corresponding number of tubings could be provided. Thereby, a plurality of sample and/or other liquids are passed alternatingly according to a predetermined sequence through the measurement system. However, it is also possible to have several components in one gradient, which then would require only one tube. This means that the physical set up may become more complex, but it is still within the inventive concept to devise such systems.

The invention will now be further illustrated by the following non-limiting examples.

EXAMPLES

Several candidate model systems for compound - target were tested for suitable characteristics, such as rapid association and dissociation, as well as sufficient response levels (more than 20 RU).

The pulse injection method was tested on myoglobin - anti-myoglobin to get an idea of what a binding curve from a system with relatively slow kinetics would look like.

Interactions between lysozyme and a camel derived monoclonal anti-lysozyme antibody served as template for determination of interaction rate constants.

Because of its rapid kinetics the maltose - anti-maltose system was used for steady state studies, in which equilibrium response levels are used to estimate affinity ($K_D$).

Competitive inhibition was investigated using the pulse injection method on human serum albumine, HSA, and some known binders (drugs).

For all model systems used, 1:1 binding was assumed.

**Materials and methods**

***Instrumentation and software***

The sensor chips that were used throughout were CM-5 surfaces (Biacore AB, Uppsala, Sweden). All interaction studies were performed with a BIACORE® 3000 biosensor (Biacore AB, Uppsala, Sweden). Data was presented as sensorgrams by the BIACORE® 3000 control software and evaluated using the BIAevaluation software, version 3.1 (Biacore AB, Uppsala, Sweden), Matlab version 5.3 (The MathWorks, Inc., Natick, MA) and Excel 97 (Microsoft Corp., Redmond, WA).

***Reagents***

BIA-certified HBS-EP (0.01 M Hepes, pH 7.4, 0.15 M NaCl, 3 mM EDTA, 0.005% Tween 20; Biacore AB, Uppsala, Sweden) was used as running buffer, unless otherwise stated.

Monoclonal anti-myoglobin antibody and sheep myoglobin were from Biacore AB.

The cAb-Lys3:s SGS, camel derived heavy chain triple mutant single domain antibody directed against lysozyme, was obtained from the Department of Ultrastructure, Vrije Universiteit, Brussels, Belgium. Hen egg-white lysozyme was from the same place.

Monoclonal anti-maltose antibody, monoclonal anti-AFP antibody (clone 118B) and maltose were from Biacore AB.

HSA (essentially fatty acid and globulin free, A 3782) as well as warfarin, digitoxin and phenylbutazone were from Sigma.

**Example 1 (Slow kinetic interaction)**

A monoclonal anti-myoglobin antibody was immobilised to a level of approximately 2070 and 930 RU (flowcells 2 and 4, respectively in Fig. 1) by a standard amine coupling procedure at 20 °C. Following a 7-min. activation with EDC-NHS, anti-myoglobin (10 μg/ml in 10 mM sodium acetate, pH 5.0) was injected over the surface for 5 min. Unreacted esters were then deactivated by a 7-min. injection of 1 M ethanolamine, pH 8.5. Channels 1 and 3 were used as reference cells, and were activated and deactivated as above. The flow rate was 5 μl/min.

Myoglobin, 20 μg/ml (initial concentration 110 nM in running buffer), was injected over all flowcells simultaneously at 20, 25 and 30 °C, using the pulse injection method. The signals in flowcells 1 and 3 were subtracted from those of flowcells 2 and 4, respectively, to correct for bulk errors. Each injection was followed by two 30-sec. pulses of regeneration solution (10 mM glycine pH 3, 1 mM NaCl, 10 % ethanol). The injection protocol was as follows:

1. A few alternating air and sample segments are aspirated and injected into the IFC. In this way the sample will be protected from unwanted dispersion with running buffer in the IFC.

2. The needle is filled with a certain volume of buffer. Sample is then aspirated, which will lead to a rapid mixing of the sample and buffer by dispersion. Depending on the time between aspiration and injection, diffusion probably also influences the sample concentration to some extent, although the contribution is minor.

3. The valves of the sample and buffer flow are opened to enable alternating sample and buffer pulses. Fig. 1 shows a schematic view of the flow paths. During the association phase (here 12 seconds) buffer flow is set to 1 μl/min,

and a certain amount of sample (here 20 μl) is injected into the IFC (disp) at a specified rate, here 100 μl/min. The flow rate is then reset to 100 μl/min and the compound that has associated is allowed to dissociate for 12 seconds. The process is repeated until the entire aspirated sample has been injected.

The signals of the reference flow cells were subtracted from the response curves of the anti-myoglobin cells.
The binding curve of the pulse injections of myoglobin performed on the anti-myoglobin surface (Fig. 2) at three different temperatures corresponded well with the curve that was obtained from the computer simulations.

**Example 2 (Estimation of interaction rate constants)**

The kinetics of the triple mutant of the camel antibody (SGS) binding to lysozyme was studied with the pulse injection method according to the invention. All experiments were performed at 30 °C. 190 RU (chip 1) and 280 RU (chip 2) of lysozyme was immobilised using the amine coupling procedure described in Example 1. Upon a 2-min. activation, lysozyme (8 μg/ml in 10 mM $Na_2HPO_4$, pH 7.0) was injected for 3 min. (chip 1) and 4 min. 30 sec. (chip 2). 10 mM $Na_2HPO_4$, pH 7.0 (flow rate 5 μl/min) was used as running buffer during immobilisation. SGS was injected at different initial concentrations (0.5, 1.0 and 2.0 μM in HBS-EP). Results are shown in Fig. 3.
Bulk errors in the sample solutions were corrected for by subtraction of the reference flow cell signals. Individual pulses were separated and aligned, using MATLAB, so that each pulse corresponded to one binding curve. The curves were superimposed in the BIAevaluation software. 15 pulses were used in every fit. The first two pulses were assumed to be of initial concentration. Global starting values of $k_a$, $k_d$ and $R_{max}$ were fitted to the second pulse (pulse number one was omitted because of its irregular shape), since its concentration was known. These values were then used to locally fit the concentrations of all pulses. $k_a$, $k_d$ and $R_{max}$ estimations were refined, using the new concentration information. The process was repeated until all parameters converged. Each pulse injection was evaluated separately. The fitting of the concentration resulted in a partially linear concentration gradient. Kinetic data obtained with the pulse injection method is presented together with mean values and standard deviations in Table 1 (SGS).

**Table 1 (Results from a pulse injection assay with camel antibody SGS and lysozyme)**

| | $C_0$ (μM)*) | $k_a$ (M⁻¹s⁻¹) | $k_d$ (s⁻¹) | $R_{max}$ (RU) | | $K_D$ (M) | $\chi^2$ **) |
|---|---|---|---|---|---|---|---|
| Chip 1 | 0.5 | 1.75e5 | 0.508 | 137 | | 2.9e-6 | 0.0972 |
| (190 RU) | 0.5 | 9.99e4 | 0.435 | 180 | | 4.35e-6 | 0.151 |
| | 0.5 | 1.17e5 | 0.484 | 170 | | 4.14e-6 | 0.122 |
| | 1 | 1.91e5 | 0.475 | 112 | | 2.5e-6 | 0.243 |
| | 1 | 4.6e5 | 0.514 | 72.7 | | 1.12e-6 | 0.198 |
| | 1 | 1.62e5 | 0.513 | 126 | | 3.17e-6 | 0.325 |
| Chip 2 | 1 | 4.60e5 | 0.466 | | 119 | 1.01e-6 | 0.383 |
| (280 RU) | 1 | 1.11e5 | 0.462 | | 286 | 4.15e-6 | 0.374 |
| | 1 | 1.32e5 | 0.42 | | 251 | 3.19e-6 | 0.348 |
| | 2 | 1.87e5 | 0.487 | | 188 | 2.60e-6 | 1.53 |
| | 2 | 2.41e5 | 0.464 | | 151 | 1.93e-6 | 0.816 |
| | 2 | 2.79e5 | 0.421 | | 137 | 1.51e-6 | 1.85 |
| Average: | | 2.18e5 | 0.471 | 133 | 189 | 2.71e-6 | |
| St.dev: | | 1.25e5 | 0.033 | 39.3 | 66.8 | 1.16e-6 | |
| Rel. st.dev.: | | 57% | 7% | 30 % | 35 % | 43% | |
| *) $C_0$ is the nominal concentration of SGS **) $\chi^2$ is a statistical measure of the quality of the fit | | | | | | | |

**Example 3 (Estimation of affinity)**

Approximately 15000 RU of anti-maltose antibody was immobilised in one of the four flow cells. Roughly the same amount of another antibody, anti-AFP, was immobilised in a reference flow cell in order to minimise errors in reference subtraction due to the high immobilisation level. These two proteins were immobilised using the "amine coupling" procedure as follows: HBS-EP was used as running buffer with a constant flow rate of 5 $\mu$l/min. After activation for 12 min. with EDC, target (anti-maltose or anti-AFP, 50 $\mu$g/ml in 10 mM sodium acetate, pH 5.0) was injected for 7 min., followed by a 12-min. deactivation. Immobilisation and all measurements on the surface were performed at 25 °C.

Samples of different initial concentrations (0.05 and 0.1 mM) were injected over the surface. The association and dissociation phases of each pulse were 12 seconds. This was sufficient to reach an equilibrium level and to allow the complexes to completely dissociate. Each experiment started with a blank run, i. e. a series of pulses of running buffer alone. The concentration of the first pulse, $C_1$, was assumed to be equal to the concentration in the vial. The refractive index of maltose being relatively high, concentrations of the following pulses, Ci, could be estimated from the response in the reference flow cell as:

$$C_i = R_{eq(i)}/R_{eq(1)} \cdot C_1 \qquad (4)$$

Data from the sensorgrams were extracted from the BIACORE® result files in the same way as the camel antibody pulses. Response levels were obtained by taking the average of 10 data points at equilibrium. Evaluation was performed with the BIAevaluation software. The affinity constant, $K_A$, was obtained as the negative slope in a linearly fitted $R_{eq}/C$ versus $R_{eq}$ plot (analogous to a Schatchard plot). $K_D$ was obtained as $1/K_A$. $R_{max}$ was found from the interception with the x axis. The constant multi-concentration pulse series were evaluated with a non-linearly fitted $R_{eq}$ versus C plot, whereby $K_A$, $K_D$ and $R_{max}$ values were obtained directly from the software.

In order to compare the results obtained with pulse injections to results obtained with the conventional method, 12 maltose injections of concentrations ranging from 0 to 1500 $\mu$M were performed. The injection time was 15 sec. Data was evaluated from a $R_{eq}$ versus C plot using the BIAevaluation software.

Affinity calculated from data obtained with the pulse injection method according to the invention yielded an average $K_D$ of $90 \times 10^{-4}$ M. A conventional affinity assay yielded a $K_D$ of $85 \times 10^{-4}$ M.

**Example 4 (Site availability of drugs binding to HSA)**

HSA (15 $\mu$g/ml in sodium acetate, pH 5.2) was immobilised to a level of approximately 12200 RU, using a standard amine coupling procedure (Frostell-Karlsson et al, J. Med. Chem. 2 000, 43:1986-2000). A neighbouring flowcell was activated and deactivated, and used as reference. The newly immobilised surface was conditioned with three consecutive 30-sec. injections of 50 mM NaOH. The immobilisation and all measurements performed on the surface were carried out at 25 °C.

100 mM (phenylbutazone, digitoxin) and 10 mM (warfarin) stock solutions of compounds in 100 % DMSO were diluted in 67 mM isotonic phosphate buffer (9.6 g $Na_2HPO_4 \cdot 2H_2O$, 1.7 g $KH_2PO_4$, 4.1 g NaCl to 1 litre, pH 7.0) to a DMSO concentration of 5 %. Samples were then diluted in running buffer (67 mM isotonic phosphate buffer, 5 % DMSO, pH 7.4) to a compound concentration of 50 $\mu$M.

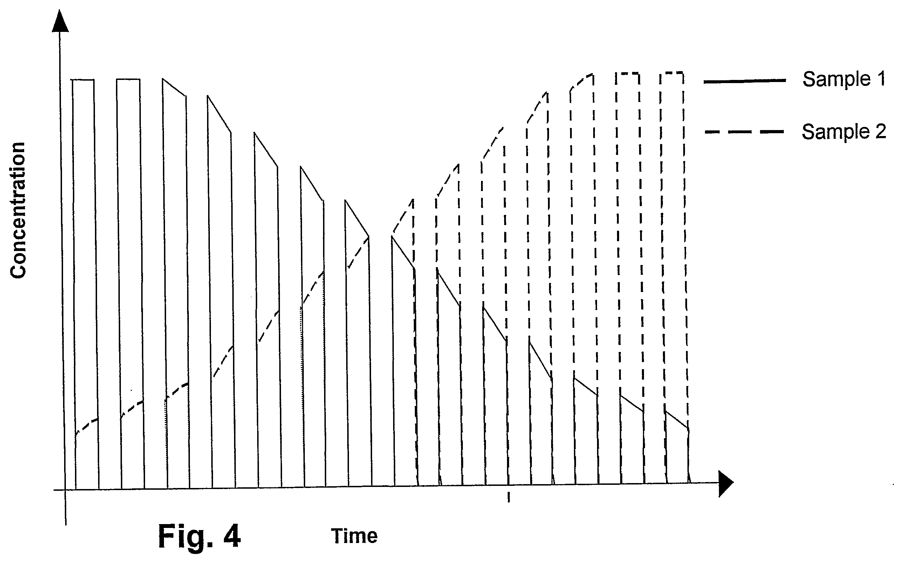

Equal volumes of two different samples were aspirated from sealed vials without separating air bubbles, and mixed by dispersion in the tubing. The presumed concentration distribution in the tubing of the two samples is shown in Fig. 4. Sample was injected using association and dissociation phases of 12 seconds each. Sample combinations are shown in table 2. Every drug was also run once combined with running buffer. Before and after each run a DMSO correction (Frostell-Karlsson *et al.,* supra) was performed in order to compensate for DMSO bulk differences between reference and HSA flow cells.

Equilibrium data from the sample - buffer runs was collected and response levels were added. The sum was compared to the response obtained when the same compounds were injected as a mixture.

**Table 2 (Combinations of drugs that were used in the HSA assay)**

| Sample 1 | Sample 2 |
|---|---|
| Phenylbutazone | Buffer |
| Phenylbutazone | Warfarin |
| Buffer | Warfarin |
| Digitoxin | Warfarin |
| Digitoxin | Buffer |

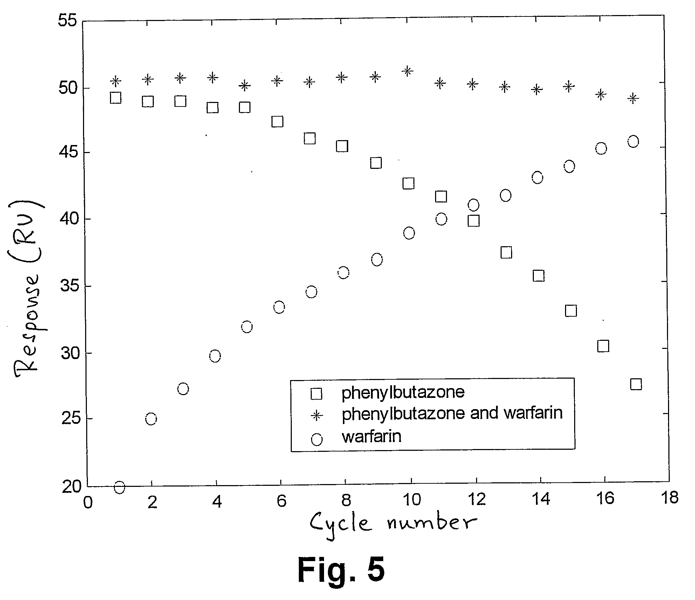

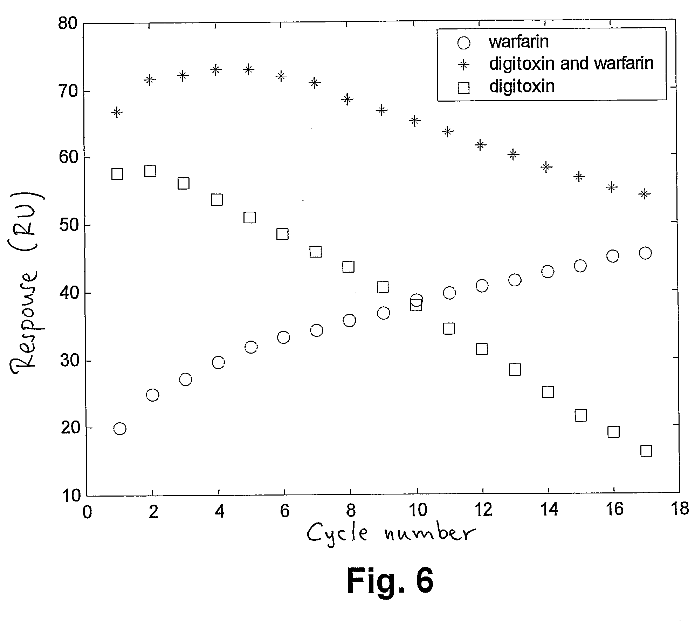

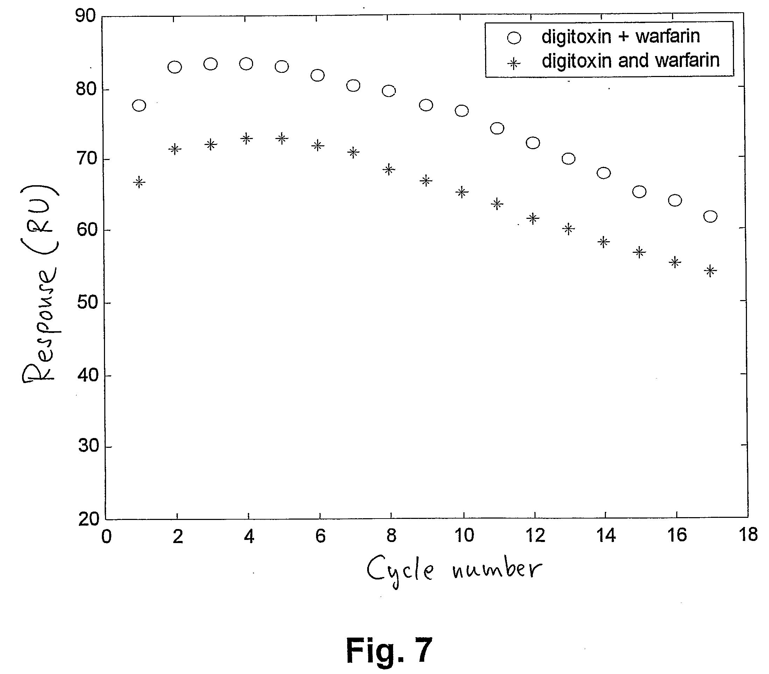

Equilibrium response levels from the two-sample gradient assay are shown in figures 5 and 6. Figure 7 shows a comparison between added responses from individual samples (X+Y) and responses of the samples injected as a mixture (XY). Digitoxin (D) and warfarin (W) are non-competitive binders. The added responses of individual samples and the response of the mixed samples should therefore be identical (Fig. 6). On the contrary, added responses of individual samples should be higher than the response from the samples injected as a mixture in the case of phenylbutazone and warfarin, since they compete for the same site (Fig. 5).

**Example 5 (Determination of optimal regeneration conditions)**

A problem often encountered in SPR analysis is to determine the optimal regeneration conditions. A too weak regeneration will not restore the sensor chip to a sufficient degree, and a too strong regeneration will destroy the sensor chip. Therefore, it is desirable to be able to optimize the regeneration in a reliable and quick procedure. This can be done with the pulse injection method according to the invention.

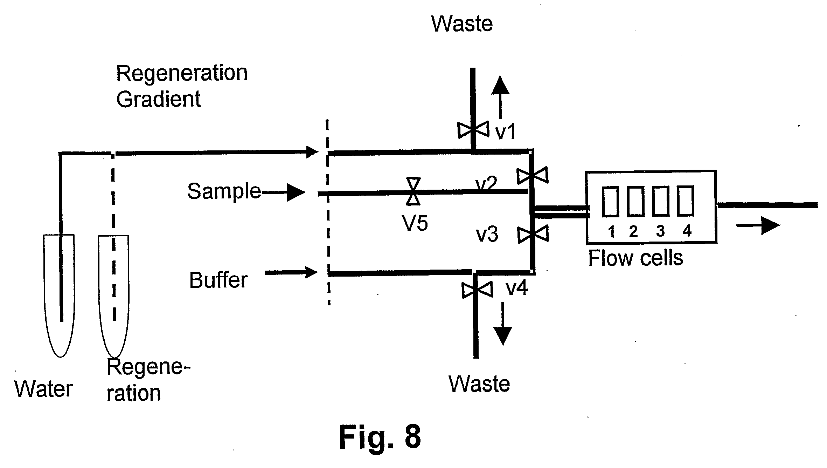

Fig. 8 illustrates a set up for a case where the injections comprise alternating pulses of three different liquids.

Thus, a set up with three different liquid lines is provided, namely a first line for system buffer (HBS buffer), a second line for an antibody (Anti-biotin antibody (Novocastra Laboratories Ltd, Newcastle upon Tyne U.K.)) and a third line for regeneration solution (50mM NaOH or 10mM Glycin pH 3.0 (both from Biacore AB). The sensor chip is Sensor Chip Biotin (Biacore AB).

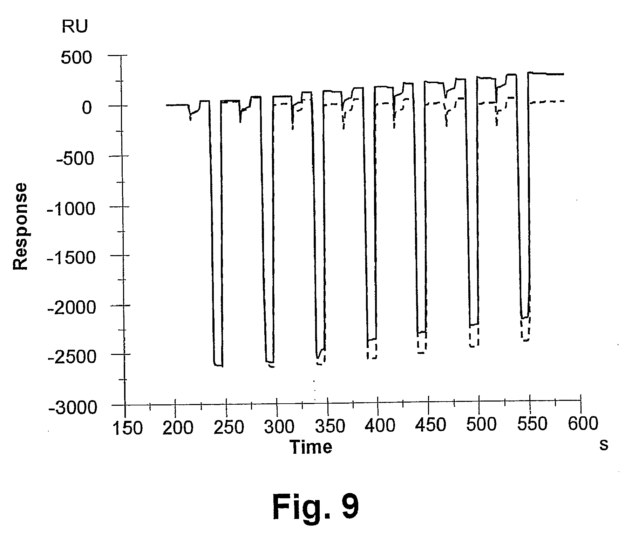

The injection sequence was as follows: buffer - antibody - buffer - regeneration(gradient) - buffer - antibody - buffer - regeneration(gradient) - buffer - and so on. Two experiments were performed, the results of which are shown in Fig. 9: First with a gradient of water and NaOH (broken curve), second with a gradient of water and Glycine (solid curve).

For NaOH, the first (most diluted) regeneration pulse, no regeneration effect is seen. The second pulse gives a significant regeneration, pulses 3 and higher give complete regeneration. For Glycine, no regeneration is seen for any dilution.

**Example 6 (enzyme and substrate interaction)**

A set up similar to the one in Fig. 1 is employed, but the sample line is used for providing a gradient of the enzyme MAPK2, and the buffer is replaced by a solution comprising myelic basic protein as a substrate for the enzyme. A BIACORE® sensor or a spectrophotometer is used to detect the product (phosphorylated myelic basic protein) of the enzymatic action, or the decrease in myelic basic protein concentration.

The dual gradient is achieved by filling a needle with a suitable dilution solution such as a buffer containing substrate, and then aspirating enzyme solution. Dispersion will then create a gradient in the same manner as previously described.

A pulse sequence similar to the one used in the discussion of Fig. 1 is used.

In this application a new injection method has been disclosed. It is usable for the study of affinity, kinetics and site specificity.

The above examples confirm the working of the present invention.

The average of the $K_D$ values for the maltose - anti-maltose interaction produced by the pulse injection method with sample dispersion closely resembles the average $K_D$ estimated with the traditional method.

The prior art method and the methods according to the invention result in comparable, and relatively low, standard deviations in $k_d$. The average $k_a$ and $k_d$ are in the same range for both methods.

One major advantage of the pulse injection method is the low sample consumption. While a conventional kinetic analysis requires several sample aspirations, each of which uses an additional amount of solution, a single aspiration is enough to obtain multiple binding curves with the pulse injection method. Furthermore, a pulse assay takes considerably less time than a conventional assay. One cycle of 20 pulses lasts about 20 minutes, compared to over an hour and a half for a traditional method (for example the conventional maltose assay in Example 3, containing 12 concentrations).

**Claims**

1. A method of characterizing an interaction between at least two species in a liquid environment, wherein a sample liquid comprising at least one of said species is passed as a flow through a measurement system, and wherein the interaction takes place within said measurement system, the method comprising the steps of:

   providing in said flow of sample liquid, a concentration gradient of at least one of said species;
   injecting the sample liquid comprising at least one of said species into a sensor device; and
   detecting by said sensor device a result of an interaction between said at least two species;

**characterized in that** the flow of sample liquid comprising said concentration gradient is intersected at least once with an additional liquid before the flow is injected into said sensor, so as to create pulses of separated liquid segments having different concentrations of said species forming the concentration gradient, whereby each injection contains a number of sample pulses generated by the alternating sample liquid and additional liquid flow.

2. The method of claim 1, wherein the affinity and/or the kinetics and/or the assay conditions for the interaction is/are determined.

3. The method of claim 2, wherein assay conditions are determined and one of said species comprises an agent associated with assay function.

4. The method of claim 3, wherein said agent associated with assay function comprises a regenerating agent.

5. The method of claim 3, wherein said agent associated with assay function comprises an agent affecting interaction efficiency.

6. The method as claimed in claim 5, wherein at least one of said separated segments is discarded such that it will not be injected into said sensor.

7. The method as claimed in any preceding claims, wherein the interaction takes place between said species and a target immobilized on a surface in a flow cell.

8. The method as claimed in any preceding claim, wherein the additional liquid is selected form the group consisting of a buffer and a solvent.

9. The method as claimed in any preceding claim, wherein each injection contains 5-40, suitably 15-30, preferably approximately 20 pulses.

10. The method as claimed in any preceding claim, wherein consecutive segments of air and sample are injected into the sensor device, in order to prevent unwanted dispersion with running buffer to occur in the sensor device.

11. The method as claimed in any preceding claim, wherein said additional liquid is allowed to flow through the system at a reduced rate also during the passage of said solution through the sensor device, preferably at a rate of less than 5% of the nominal rate, most preferably less than 1%.

12. The method as claimed in any preceding claim, wherein a dual gradient is generated by mixing two different solutions containing different species, whereby a positive (increasing) gradient is formed for one species and a negative (decreasing) gradient is formed for the other species.

13. The method as claimed in any preceiding claim, wherein each segment of solution is 8-20, preferably about 10-15, suitably 12 seconds long.

14. The method as claimed in claim 13, wherein each segment preferably has a volume of 1-40$\mu$l, preferably 10-40$\mu$l, more preferably 15-25$\mu$l, suitably about 20$\mu$l.

15. The method as claimed in any preceding claim, wherein the flow rate for the liquid through the flow cell is 50-200, preferably 80-120, suitably about 100$\mu$l/min.

16. The method as claimed in any preceding claim, wherein one or more aliquots of said sample liquid flow is/are discarded before the flow is intersected by said additional liquid.

17. The method as claimed in any preceding claim, wherein the interaction takes place between the species in solution and a species immobilized on a surface in said measurement system.

18. The method as claimed in claim 17, wherein the immobilized species is an antibody and the species in solution is/are an antigen to said antibody.

19. The method as claimed in claim 17, wherein the immobilized species is an antigen and the species in solution is/are an antibody for said antigen.

20. The method as claimed in any of claims 1 - 16, wherein the interaction takes place between two species in solution.

21. The method as claimed in claim 20, wherein one species is an enzyme and another species is a substrate for said enzyme.

22. The method as claimed in any preceding claim, wherein a plurality of sample and/or other liquids are injected alternatingly according to a predetermined sequence into said measurement system.

23. The method as claimed in claim 22, wherein a first liquid contains a compound binding to a target on a sensor device, and a second liquid is a regeneration solution, and a third liquid comprises a buffer, and wherein the detected result of the interaction is used to determine an appropriate level of regeneration for said sensor device.

24. An apparatus for characterizing interaction of between at least two species in a liquid environment, wherein a liquid comprising said at least one species is injected as a flow into a measurement system, and wherein the interaction takes place within said measurement system, comprising
means for generating a concentration gradient of at least a first one of said species or of at least one other species having an influence on the interaction or on interacted components;
means for injecting said flow into a sensor device; and
means for detecting by said sensor device a result of interaction between said at least two species;
**characterized by**
means for intersecting the flow of liquid comprising said concentration gradient at least once with an additional liquid before the flow is injected into said sensor, so as to create pulses of separated liquid segments having different concentrations of said species forming the concentration gradient, whereby each injection contains a number of sample pulses generated by the alternating sample liquid and additional liquid flow.

25. A computer program product directly loadable into the internal memory of a processing means coupled to apparatus as claimed in claim 24 comprising the software code means for performing the steps of any of claims 1-23.

26. A computer program product stored on a computer usable medium, comprising a readable program for causing a processing means coupled to an apparatus as claimed in claim 24, to control an execution of the steps of any of claims 1- 23.

**Patentansprüche**

1. Verfahren zur Charakterisierung einer Interaktion zwischen mindestens zwei Spezies in einer flüssigen Umgebung, wobei eine Testflüssigkeit, die mindestens eine der Spezies umfasst, als Fluss durch ein Messsystem geleitet wird, und wobei die Interaktion innerhalb dieses Messsystems stattfindet, wobei das Verfahren die folgenden Schritte umfasst:

Zurverfügungstellen in diesem Fluss der Testflüssigkeit einen Konzentrationsgradienten von mindestens einer der Spezies;
Injektion der Testflüssigkeit, die mindestens eine der Spezies umfasst, in ein Sensorgerät; und
Ermittlung durch dieses Sensorgerät eines Ergebnisses einer Interaktion zwischen den mindestens zwei Spezies;

**dadurch gekennzeichnet, dass**
der Fluss der Testflüssigkeit, die den Konzentrationsgradienten umfasst, mindestens einmal mit einer zusätzlichen Flüssigkeit gekreuzt wird, bevor die Strömung in den Sensor injiziert wird, so dass Impulse getrennter Flüssigkeitssegmente erzeugt werden, die unterschiedliche Konzentrationen der Spezies aufweisen, die den Konzentrationsgradienten bilden, wobei jede Injektion eine Anzahl von Testimpulsen enthält, die durch den alternierenden Fluss der Testflüssigkeit und der zusätzlichen Flüssigkeit generiert werden.

2. Verfahren nach Anspruch 1, wobei die Affinität und/oder Kinetik und/oder Assay-Bedingungen für die Interaktion vorbestimmt ist/sind.

3. Verfahren nach Anspruch 2, wobei die Assay-Bedingungen vorbestimmt sind und eine der Spezies ein Mittel umfasst, das mit der Assay-Funktion assoziiert ist.

4. Verfahren nach Anspruch 3, wobei das Mittel, das mit der Assay-Funktion assoziiert ist, ein Regeneriermittel enthält.

5. Verfahren nach Anspruch 3, wobei das Mittel, das mit der Assay-Funktion assoziiert ist, ein Mittel umfasst, das die Interaktionseffizienz beeinflusst.

6. Verfahren nach Anspruch 5, wobei mindestens eines der getrennten Segmente so abgeschieden wird, dass es nicht in den Sensor injiziert wird.

7. Verfahren nach einem der vorhergenden Ansprüche, wobei die Interaktion zwischen der Spezies und einem Ziel stattfindet, das auf einer Oberfläche in einer Durchflusszelle immobilisiert ist.

8. Verfahren nach einem der vorhergenden Ansprüche, wobei die zusätzliche Flüssigkeit aus der Gruppe ausgewählt ist, die aus einem Puffer und einem Lösungsmittel besteht.

9. Verfahren nach einem der vorhergenden Ansprüche, wobei jede Injektion 5-40, geeigneterweise 15-30, bevorzugt etwa 20 Impulse enthält.

10. Verfahren nach einem der vorhergenden Ansprüche, wobei aufeinanderfolgende Segmente aus Luft und Probe in das Sensorgerät injiziert werden, um zu verhindern, dass eine ungewünschte Dispersion mit Laufpuffer im Sensorgerät auftritt.

11. Verfahren nach einem der vorhergenden Ansprüche, wobei die zusätzliche Flüssigkeit mit einer verminderten Rate durch das System fließen gelassen wird, ebenso während dem Durchfließen der Lösung durch das Sensorgerät, bevorzugt mit einer Rate von weniger als 5 % der Nominalrate, am meisten bevorzugt weniger als 1 %.

12. Verfahren nach einem der vorhergenden Ansprüche, wobei ein dualer Gradient durch Mischen von zwei unterschiedlichen Lösungen, die in unterschiedlichen Spezies enthalten sind, generiert wird, wobei ein positiver (ansteigender) Gradient für eine Spezies gebildet wird, und ein negativer (abfallender) Gradient für die andere Spezies gebildet wird.

13. Verfahren nach einem der vorhergenden Ansprüche, wobei jedes Segment der Lösung 8-20, bevorzugt etwa 10-15, geeigneterweise 12 Sekunden lang ist.

14. Verfahren nach Anspruch 13, wobei jedes Segment bevorzugt ein Volumen von 1-40 $\mu$l hat, bevorzugt 10-40 $\mu$l, mehr bevorzugt 15-25 $\mu$l, geeigneterweise etwa 20 $\mu$l.

15. Verfahren nach einem der vorhergenden Ansprüche, wobei die Durchflussrate für die Flüssigkeit durch die Durchflusszelle 50-200, bevorzugt 80-120, geeigneterweise etwa 100 $\mu$l/min beträgt.

16. Verfahren nach einem der vorhergenden Ansprüche, wobei ein oder mehrere Aliquote der Testflüssigkeit abgeschieden wird/werden, bevor der Fluss durch die zusätzliche Flüssigkeit gekreuzt wird.

17. Verfahren nach einem der vorhergenden Ansprüche, wobei die Interaktion zwischen den Spezies in Lösung stattfindet und eine Spezies auf einer Oberfläche in dem Messsystem immobilisiert ist.

18. Verfahren nach Anspruch 17, wobei die immobilisierte Spezies ein Antikörper ist und die Spezies in Lösung ist/sind ein Antigen zu dem Antikörper.

19. Verfahren nach Anspruch 17, wobei die immobilisierte Spezies ein Antigen ist und die Spezies in Lösung ist/sind ein Antikörper für das Antigen.

20. Verfahren nach einem der Ansprüche 1 - 16, wobei die Interaktion zwischen zwei Spezies in Lösung stattfindet.

21. Verfahren nach Anspruch 20, wobei eine Spezies ein Enzym ist und eine weitere Spezies ein Substrat für das Enzym.

**22.** Verfahren nach einem der vorhergenden Ansprüche, wobei eine Vielzahl von Test- und/oder anderen Flüssigkeiten alternierend nach einer vorbestimmten Sequenz in das Messsystem injiziert werden.

**23.** Verfahren nach Anspruch 22, wobei eine erste Flüssigkeit eine Verbindung enthält, die an ein Ziel auf einem Sensorgerät bindet, und eine zweite Flüssigkeit ist eine Regenerierlösung, und eine dritte Flüssigkeit umfasst einen Puffer, und wobei das ermittelte Ergebnis der Interaktion verwendet wird, um ein angemessenes Niveau der Regeneration für das Sensorgerät zu bestimmen.

**24.** Vorrichtung zur Charakterisierung der Interaktion zwischen mindestens zwei Spezies in einer flüssigen Umgebung, wobei eine Flüssigkeit, die mindestens eine Spezies umfasst, als Fluss in ein Messsystem injiziert wird, und wobei die Interaktion innerhalb des Messsystems stattfindet, umfassend

Mittel zur Generierung eines Konzentrationsgradienten von mindestens einer ersten der Spezies oder von mindestens einer anderen Spezies, der einen Einfluss auf die Interaktion oder die interagierenden Komponenten hat;

Mittel zum Injizieren dieses Flusses in ein Sensorgerät; und

Mittel zur Ermittlung durch das Sensorgerät eines Ergebnisses der Interaktion zwischen mindestens zwei Spezies; **gekennzeichnet durch**

Mittel zur Kreuzung des Flusses der Flüssigkeit, die den Konzentrationsgradienten umfasst, mindestens einmal mit einer zusätzlichen Flüssigkeit, bevor der Fluss in den Sensor injiziert wird, so dass Impulse getrennter Flüssigkeitssegmente erzeugt werden, die unterschiedliche Konzentrationen der Spezies aufweisen, die den Konzentrationsgradienten bilden, wobei jede Injektion eine Anzahl von Testimpulsen enthält, die **durch** das Alternieren des Flusses von Testflüssigkeit und zusätzlicher Flüssigkeit generiert werden.

**25.** Computerprogramm-Produkt, das direkt in den internen Speicher eines Verarbeitungsmittels geladen werden kann, das mit der Vorrichtung nach Anspruch 24 gekoppelt ist, umfassend die Softwarecode-Mittel zum Durchführen der Schritte nach einem der Ansprüche 1 - 23.

**26.** Computerprogramm-Produkt, das auf einem durch einen Computer verwendbaren Medium gespeichert wird, umfassend ein lesbares Programm, um zu verursachen, dass ein Verarbeitungsmittel, das an eine Vorrichtung nach Anspruch 24 gekoppelt ist, die Ausführung der Schritte nach einem der Ansprüche 1 - 23 steuert.

**Revendications**

**1.** Procédé de caractérisation d'une interaction entre au moins deux espèces dans un environnement liquide, dans lequel un liquide d'échantillonnage comprenant au moins l'une desdites espèces est envoyé sous la forme d'un écoulement à travers un système de mesure et dans lequel l'interaction a lieu à l'intérieur dudit système de mesure, le procédé comprenant les étapes consistant à :

fournir dans ledit écoulement de liquide d'échantillonnage un gradient de concentration d'au moins l'une desdites espèces ;

injecter le liquide d'échantillonnage comprenant au moins l'une desdites espèces dans un dispositif capteur ; et

détecter par ledit dispositif capteur un résultat d'une interaction entre lesdites au moins deux espèces ;

**caractérisé en ce que** :

l'écoulement de liquide d'échantillonnage comprenant ledit gradient de concentration est coupé au moins une fois par un liquide supplémentaire avant que l'écoulement ne soit injecté dans ledit capteur de manière à créer des impulsions de segments liquide séparés ayant différentes concentrations desdites espèces formant le gradient de concentration, de sorte que chaque injection contienne un certain nombre d'impulsions d'échantillonnage générées par l'écoulement de liquide d'échantillonnage et l'écoulement de liquide supplémentaire en alternance.

**2.** Procédé selon la revendication 1, dans lequel l'affinité et/ou la cinétique et/ou les conditions de dosage pour l'interaction est/sont déterminées.

**3.** Procédé selon la revendication 2, dans lequel les conditions de dosage sont déterminées et l'une desdites espèces comprend un agent associé à la fonction de dosage.

4. Procédé selon la revendication 3, dans lequel ledit agent associé à la fonction de dosage comprend un agent de régénération.

5. Procédé selon la revendication 3, dans lequel ledit agent associé à la fonction de dosage comprend un agent affectant le rendement d'interaction.

6. Procédé selon la revendication 5, dans lequel au moins l'un desdits segments séparés est mis au rebut de sorte qu'il ne soit pas injecté dans ledit capteur.

7. Procédé selon l'une quelconque des revendications précédentes, dans lequel l'interaction a lieu entre lesdites espèces et une cible immobilisée à la surface d'une cellule d'écoulement.

8. Procédé selon l'une quelconque des revendications précédentes, dans lequel le liquide supplémentaire est choisi dans le groupe constitué d'un tampon et d'un solvant.

9. Procédé selon l'une quelconque des revendications précédentes, dans lequel chaque injection contient 5 à 40, commodément 15 à 30, de préférence environ 20 impulsions.

10. Procédé selon l'une quelconque des revendications précédentes, dans lequel des segments d'air et d'échantillon consécutifs sont injectés dans le dispositif capteur afin d'empêcher une dispersion non souhaitée avec le tampon coulant de se produire dans le dispositif capteur.

11. Procédé selon l'une quelconque des revendications précédentes, dans lequel on laisse ledit liquide supplémentaire s'écouler à travers le système à taux réduit également au cours du passage de ladite solution à travers le dispositif capteur, de préférence à un taux inférieur à 5 % du taux théorique, mieux encore à moins de 1 %.

12. Procédé selon l'une quelconque des revendications précédentes, dans lequel un gradient double est généré en mélangeant deux solutions différentes contenant différentes espèces, de sorte qu'un gradient positif (croissant) soit formé pour une espèce et qu'un gradient négatif (décroissant) soit formé pour l'autre espèce.

13. Procédé selon l'une quelconque des revendications précédentes, dans lequel chaque segment de solution a une longueur de 8 à 20, de préférence d'environ 10 à 15, commodément de 12 secondes.

14. Procédé selon la revendication 13, dans lequel chaque segment a de préférence un volume de 1 à 40 $\mu$L, de préférence de 10 à 40 $\mu$L, mieux encore de 15 à 25 $\mu$L, commodément d'environ 20 $\mu$L.

15. Procédé selon l'une quelconque des revendications précédentes, dans lequel le débit pour le liquide à travers la cellule d'écoulement est de 50 à 200, de préférence de 80 à 120, commodément d'environ 100 $\mu$L/min.

16. Procédé selon l'une quelconque des revendications précédentes, dans lequel une ou plusieurs fractions aliquotes dudit écoulement de liquide d'échantillonnage est ou sont mises au rebut avant que l'écoulement ne soit coupé par ledit liquide supplémentaire.

17. Procédé selon l'une quelconque des revendications précédentes, dans lequel l'interaction a lieu entre les espèces en solution et une espèce immobilisée à la surface dudit système de mesure.

18. Procédé selon la revendication 17, dans lequel l'espèce immobilisée est un anticorps et la ou les espèces en solution est ou sont un antigène audit anticorps.

19. Procédé selon la revendication 17, dans lequel l'espèce immobilisée est un antigène et la ou les espèces en solution est ou sont un anticorps pour ledit antigène.

20. Procédé selon l'une quelconque des revendications 1 à 16, dans lequel l'interaction a lieu entre deux espèces en solution.

21. Procédé selon la revendication 20, dans lequel une espèce est un enzyme et une autre espèce est un substrat pour ledit enzyme.

**22.** Procédé selon l'une quelconque des revendications précédentes, dans lequel une pluralité de liquides d'échantillonnage et/ou d'autres liquides sont injectés en alternance selon une séquence prédéterminée dans ledit système de mesure.

**23.** Procédé selon la revendication 22, dans lequel un premier liquide contient un composé se liant à une cible sur un dispositif capteur, un deuxième liquide est une solution de régénération et un troisième liquide comprend un tampon, et dans lequel le résultat détecté de l'interaction est utilisé pour déterminer un niveau approprié de régénération pour ledit dispositif capteur.

**24.** Appareil permettant de caractériser une interaction entre au moins deux espèces dans un environnement liquide, dans lequel un liquide comprenant ladite au moins une espèce est injecté sous la forme d'un écoulement dans un système de mesure et dans lequel l'interaction a lieu dans ledit système de mesure, comprenant :

des moyens pour générer un gradient de concentration d'au moins une première desdites espèces ou d'au moins une autre espèce ayant une influence sur l'interaction ou sur les composants qui interagissent ;
des moyens pour injecter ledit écoulement dans un dispositif capteur ; et
des moyens pour détecter par ledit dispositif capteur un résultat de l'interaction entre lesdites au moins deux espèces ;

**caractérisé par** :

des moyens pour couper l'écoulement de liquide comprenant ledit gradient de concentration au moins une fois avec un liquide supplémentaire avant que l'écoulement ne soit injecté dans ledit capteur de façon à créer des impulsions de segments liquides séparés ayant différentes concentrations desdites espèces formant le gradient de concentration, de manière que chaque injection contienne un certain nombre d'impulsions d'échantillonnage générées par l'écoulement de liquide d'échantillonnage et l'écoulement de liquide supplémentaire en alternance.

**25.** Produit de programmation informatique directement chargeable dans la mémoire interne d'un moyen de traitement couplé à l'appareil selon la revendication 24, comprenant les moyens de codage de logiciels pour effectuer les étapes de l'une quelconque des revendications 1 à 23.

**26.** Produit de programmation informatique stocké sur un support utilisable sur ordinateur, comprenant un programme lisible pour amener un moyen de traitement couplé à un appareil selon la revendication 24 à commander l'exécution desdites étapes de l'une quelconque des revendications 1 à 23.

**Fig. 1**

EP 1 631 829 B1

Fig. 2

SGS, initial concentration 2 uM

Fig. 3

EP 1 631 829 B1

Fig. 4

Fig. 5

**Fig. 6**

**Fig. 7**

**Fig. 8**

EP 1 631 829 B1

**Fig. 9**

EP 1 631 829 B1

**Fig. 10**

EP 1 631 829 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SHAN-RETZLAF et al.** Analyte Gradient-Surface Plasmon Resonance: A One-Step Method for Determining Kinetic Rates and Macromolecular Binding Affinities. *Analytical Chemistry,* vol. 72 (17), 4212-4220

- **FROSTELL-KARLSSON et al.** *J. Med. Chem.,* 2000, vol. 43, 1986-2000